# EUROPÄISCHE PATENTSCHRIFT

(11) **EP 3 697 672 B1**
(45) Veröffentlichungstag und Bekanntmachung des Hinweises auf die Patenterteilung: **01.09.2021**
(21) Anmeldenummer: 18785891.5
(22) Anmeldetag: 04.10.2018
(51) Int. Cl.: B62D 1/06

(54) **VERFAHREN ZUM HERSTELLEN EINES VERKLEIDETEN LENKRADS FÜR EIN FAHRZEUG**
METHOD FOR PRODUCING A COVERED STEERING WHEEL FOR A VEHICLE
PROCÉDÉ DE FABRICATION D'UN VOLANT DE VÉHICULE, MUNI D'UN HABILLAGE

(30) Priorität: 18.10.2017 DE 102017218591
(43) Veröffentlichungstag der Anmeldung: 26.08.2020
(73) Patentinhaber: Volkswagen Aktiengesellschaft, 38440 Wolfsburg (DE)
(72) Erfinder: ZLATKOV, Branislav, 38104 Braunschweig (DE); DANSCHACHER, Markus, 38110 Braunschweig (DE); QUANDER, Nils, 38154 Königslutter (DE)
(86) Internationale Anmeldenummer: PCT/EP2018/076995
(87) Internationale Veröffentlichungsnummer: WO 2019/076639

(56) Entgegenhaltungen:
- WO-A1-2010/069599
- WO-A2-2007/035100
- DE-A1- 3 207 376
- DE-A1- 4 130 198
- DE-A1- 19 915 248
- DE-A1-102004 033 182
- DE-B4-102007 031 014

## Beschreibung

Die Erfindung betrifft ein Verfahren zum Herstellen eines verkleideten Lenkrads für ein Fahrzeug, insbesondere für ein Kraftfahrzeug.

Bekannte Lenkräder umfassen ein zumeist metallisches Lenkradskelett, das von einer raumausfüllenden Matrix, zumeist einem Kunststoffschaum, etwa aus Polyurethan, umhüllt ist. In der Regel definiert das Matrixmaterial die funktionale geometrische Form des Lenkrads. Als abschließende sichtbare Schicht umhüllt in der Regel eine Verkleidung die Matrix, beispielsweise aus Leder oder einem Textil.

Zur Herstellung wird üblicherweise das Verkleidungsmaterial auf das entsprechende Endmaß zugeschnitten und maschinell zu einem Ring zusammengenäht, wobei ein Längsschlitz noch offen bleibt. Dann wird manuell ein Kleber auf das umspritzte Lenkrad oder der Nichtsichtseite des Verkleidungsmaterials aufgebracht, das so kaschierte Verkleidungsmaterial auf das Lenkrad gezogen und durch viele manuelle Schritte die Längsseiten des Verkleidungsmaterials angepresst und justiert. Anschließend wird die Längsnaht manuell durch Nähen geschlossen. Viele dieser Fertigungsschritte erfolgen manuell. Dies bedingt lange Zykluszeiten, mangelnde Reproduzierbarkeit und hohe Kosten.

DE 41 30 198 A1 beschreibt eine Vorrichtung zum automatisierten Umwickeln eines Lenkrads mit einer Ummantelung. Dabei wird zunächst das Ummantelungsmaterial mit einem Klebstoff bestrichen und um das Lenkrad gelegt und dieses Gefüge in die Vorrichtung eingelegt, wo es durch mehrere Halteblöcke fixiert wird. Dann erfolgt mittels mehrerer Kolben-Zylinder-Einheiten der Vorrichtung an einer ersten Stelle des Lenkrads ein Anpressen und Überstreifen einer freien Längskante der Ummantelung auf das Lenkrad, sodass diese anklebt. Anschließend wird das Lenkrad sukzessive weitergedreht, um den Anpress- und Überstreifvorgang zu wiederholen, bis das Lenkrad entlang seines gesamten Umfangs mit der Ummantelung überklebt ist.

Aus DE 199 15 248 A1 ist bekannt, eine Negativform zu verwenden, welche die Lenkradvorderseite abbildet. Dabei wird zunächst der Bezugsstoff in die Negativform eingelegt und dort mittels Vakuum angesaugt, dann der Bezugsstoff ausgerichtet und Klebstoff auf diesen aufgetragen und anschließend das Lenkrad maschinell oder manuell eingepresst.

DE 10 2007 031 014 B4 beschreibt ein Verfahren zur Ummantelung eines Lenkrads mit Leder, bei dem zunächst der Lederzuschnitt und/oder das Lenkradsegment mit einer Haftmasse bestrichen und das Lenkradsegment in den Lederzuschnitt eingelegt wird. Dieses Gefüge wird sodann zwischen zwei Formbacken eingelegt und die Haftmasse mittels einer Heizeinrichtung der Formbacken verfestigt.

WO 2007/035100 A2 offenbart ein Verfahren zur Verstärkung von Tragflächen eines Flugzeugs mit Verstärkungsstreifen in Form eines Metallfaserlaminats. Hierzu wird die Tragfläche stellenweise mit einem Klebstofffilm beschichtet und nachfolgend werden die Verstärkungsstreifen aufgelegt. Anschließend wird eine Heizmembran aufgelegt und ein flexibler Film auf diese Struktur dichtend aufgelegt und evakuiert. Sodann wird eine Temperierflüssigkeit durch die Heizmembran geleitet, um die Aushärtung des Klebstoffs auszulösen und die Verklebung von Tragfläche und Verstärkungsstreifen zu bewirken.

DE 10 2004 033 182 A1 beschreibt ein Verfahren zum Aufbringen einer außenseitigen Kaschierung auf einen rohrförmigen Hülsenkörper. Dies erfolgt innerhalb eines Gehäuses, das einen flexiblen Membranschlauch lagert. In das Gehäuse kann der Hülsenkörper mittels eines Aufnahmedorns, der den Hülsenkörper trägt, eingebracht werden. Auf dem Hülsenkörper befindet sich ein Klebstofffilm und eine aufgezogene Kaschierung. Der flexible Membranschlauch und das Gehäuse formen eine Fluidkammer, die gefüllt werden kann, wodurch sich der Membranschlauch radial nach innen verformt und außenseitig auf die Kaschierung legt, um ein Wärmeübertragung zu ermöglichen.

Aufgabe der vorliegenden Erfindung ist, ein Verfahren zum Herstellen eines verkleideten Lenkrads für ein Fahrzeug zur Verfügung zu stellen, das zu reproduzierbaren Ergebnissen führt und schnell und kostengünstig durchführbar ist. Insbesondere soll eine möglichst faltenfreie Ummantelung des Lenkrads gewährleistet werden.

Diese Aufgabe wird durch ein Verfahren zum Herstellen eines verkleideten Lenkrads für ein Fahrzeug mit den Merkmalen des Anspruchs 1 gelöst. Das Verfahren umfasst mindestens die folgenden Schritte, die teilweise in abweichender Reihenfolge ausgeführt werden können:
- Bereitstellen eines zu verkleidenden Lenkrads sowie eines Verkleidungsmaterials;
- Beschichten des zu verkleidenden Lenkrads und/oder einer Nichtsichtseite des Verkleidungsmaterials mit einem Klebstoff;
- Herstellen einer Anordnung umfassend das zu verkleidende Lenkrad, das mit seiner Nichtsichtseite auf dem Lenkrad angeordnete Verkleidungsmaterial sowie eine mit einem Fluid befüllbare Formmanschette, die auf einer Sichtseite des Verkleidungsmaterials angeordnet ist;
- Einlegen der Anordnung in eine Kavität eines Negativwerkzeugs;
- Befüllen der Formmanschette mit dem Fluid, sodass die Formmanschette gegen das Negativwerkzeug und gegen das von dem Verkleidungsmaterial umgebene zu verkleidende Lenkrad anpresst;
- Aktivieren und/oder Aushärten des Klebstoffs;
- Entnahme des mit dem Verkleidungsmaterial umklebten Lenkrads aus dem Negativwerkzeug und der Formmanschette; und
- Endschließen des Verkleidungsmaterials durch Verbinden von Längsrändern desselben miteinander.

Erfindungsgemäß wird somit eine Formmanschette verwendet, die um das mit dem Verkleidungsmaterial umhüllte Lenkrad angeordnet wird. Nach Einlegung dieser Anordnung in das Negativwerkzeug und Befüllen der Formmanschette mit dem Fluid kommt es zu einer Expansion der Formmanschette einerseits gegen das Negativwerkzeug und andererseits gegen die Sichtseite des Verkleidungsmaterials. Hierdurch wird ein sehr gleichmäßiger, isostatischer Druckaufbau erzeugt, der zu einem homogenen Anpressen des Verkleidungsmaterials auf das Lenkrad führt. Auf diese Weise wird eine faltenfreie Ummantelung des Lenkrads mit dem Verkleidungsmaterial erzielt. Dabei ist das Ergebnis in hohem Maße reproduzierbar.

In bevorzugter Ausführung der Erfindung ist die Formmanschette aus einer flexiblen und/oder elastischen Polymerfolie gebildet. Aufgrund dieser Eigenschaften kommt es zu einem besonders guten im Wesentlichen lückenlosen Anliegen der Formmanschette an das Verkleidungsmaterial. Hierdurch wird die Homogenität der Druckausübung auf das Verkleidungsmaterial innerhalb des Negativwerkzeugs weiter erhöht.

Weiterhin ist es von Vorteil, dass die Formmanschette aus einem transparenten Polymermaterial gebildet ist. Hierdurch wird die optische Kontrolle der korrekten Positionierung auf dem Verkleidungsmaterial beziehungsweise dem zu verkleidenden Lenkrad erleichtert.

Die Formmanschette kann beispielsweise aus zwei randseitig miteinander verbundenen Folienlagen rechteckigen Zuschnitts ausgebildet sein. In einer Weiterbildung der Erfindung weist die Formmanschette zumindest im befüllten Zustand eine Ringform auf, welche längsseitig, insbesondere entlang eines Innenumfangs des Rings, offen ist. Durch die ringförmige Ausbildung bildet die Formmanschette im Wesentlichen die Form des Lenkrads nach. Hierdurch wird vermieden, dass die Formmanschette ihrerseits bei ihrer Anordnung um das Lenkrad Falten wirft. Durch diese Maßnahme wird die Homogenität der Druckausübung auf das mit dem Verkleidungsmaterial umgebene Lenkrad noch weiter verbessert.

Die Formmanschette weist vorzugsweise zumindest einen ersten Anschluss zum Zuführen des Fluids und einen zweiten Anschluss zum Abführen des Fluids auf. Das Befüllen der Formmanschette mit dem Fluid erfolgt somit durch Einleiten des Fluids durch den zumindest einen ersten Anschluss. Das Befüllen kann dabei diskontinuierlich in einem einmaligen Vorgang erfolgen, in dem die Formmanschette mit dem Fluid befüllt wird und die Zufuhr anschließend gestoppt und die Formmanschette in dem befüllten Zustand gehalten wird. Alternativ kann das Fluid kontinuierlich durch den zumindest einen ersten Anschluss zugeführt und durch den zumindest einen zweiten Anschluss abgeführt werden.

Das Fluid kann ein gasförmiges Medium sein, beispielsweise Luft, oder ein flüssiges Medium, beispielsweise Wasser, Öl oder eine Lösung oder Mischung auf Wasser- oder Ölbasis.

Das Herstellen der Anordnung aus Lenkrad, Verkleidungsmaterial und Formmanschette kann auf unterschiedliche Weise erfolgen. In einer ersten Ausführung wird das Verkleidungsmaterial auf und/oder in der Formmanschette angeordnet und anschließend das Gefüge aus Formmanschette und Verkleidungsmaterial auf das zu verkleidende Lenkrad aufgebracht. In alternativer Vorgehensweise wird zunächst das Verkleidungsmaterial mit seiner Nichtsichtseite auf das zu verkleidende Lenkrad aufgebracht und anschließend die Formmanschette um das Gefüge aus Lenkrad und Verkleidungsmaterial aufgebracht.

In Ausführungen des Verfahrens umfasst das Aktivieren und/oder Aushärten des Klebstoffs die Zufuhr von Energie, insbesondere von thermischer Energie (Wärme), Ultraschallenergie oder dergleichen, zu dem zu verklebenden Bauteil. In einer Weiterbildung der Erfindung wird zu diesem Zweck die Formmanschette mit einem erwärmten Fluid befüllt, um das Aushärten des Klebstoffs zu aktivieren und/oder zu unterstützen. Dabei wird unter "erwärmt" eine Temperatur verstanden, die oberhalb der Raumtemperatur liegt, beispielsweise bei 50 °C oder höher.

Weiterhin kann das Negativwerkzeug mit einer Heizeinrichtung ausgestattet sein, die zum Aktivieren und/oder Aushärten des Klebstoffs aktiviert wird. Die Heizeinrichtung kann beispielsweise eine elektrische Heizeinrichtung sein oder ein in dem Negativwerkzeug ausgebildetes Leitungssystem, durch welches ein erwärmter flüssiger Wärmeträger (Kühlmittel) geführt wird.

In einem optionalen Verfahrensschritt erfolgt nach dem Aktivieren und/oder Aushärten des Klebstoffs ein Kühlen des mit dem Verkleidungsmaterial umklebten Lenkrads. Das Kühlen kann in bevorzugter Ausgestaltung dadurch erfolgen, dass die Formmanschette mit einem kalten Fluid befüllt wird. Dabei wird unter "kalt" eine Temperatur verstanden, die unterhalb der während des Aushärtens vorliegenden Temperatur liegt, insbesondere bei oder unterhalb von Raumtemperatur. Vorzugsweise sind das warme Fluid und das kalte Fluid stofflich gleichartig oder identisch und unterscheiden sich lediglich in ihrer Temperatur.

Alternativ oder zusätzlich kann das optionale Kühlen über eine Kühleinrichtung der Negativform erfolgen. Die Kühleinrichtung kann ebenso wie die Heizeinrichtung durch einen Wärmeträger (Kühlmittel) erfolgen, der durch ein entsprechendes ein in dem Negativwerkzeug ausgebildetes Leitungssystem geführt wird. Dabei kann dasselbe Leitungssystem und/oder derselbe Wärmeträger wie für den Heizvorgang genutzt werden.

Das Endschließen des Verkleidungsmaterials erfolgt durch gegenseitiges Verbinden der Längsränder des Verkleidungsmaterials. Hier können unterschiedliche Schließtechniken Anwendung finden, insbesondere Nähen, Schließen von Reißverschlusshälften, die an den Längsrändern angeordnet sind, Einhaken von Hakenverschlüssen, die an den Längsrändern des Verkleidungsmaterials angeordnet sind, Verbinden von Klettverschlusshälften, die an den Längsrändern angeordnet sind, oder einer beliebigen Kombination dieser Techniken.

Das Negativwerkzeug umfasst bevorzugt zwei Werkzeughälften, die zusammengesetzt die Kavität ausbilden, in welche das Lenkrad eingelegt wird. Dabei können die beiden Werkzeughälften den gesamten Lenkradumfang abbilden oder lediglich ein Teilsegment von diesem. In letzterem Fall erfolgt ein sukzessiver Transport der Anordnung aus Lenkrad, Verkleidungsmaterial und Formmanschette durch die beiden Werkzeughälften und Wiederholung des Aushärtevorgangs, sodass die Verklebung segmentartig durchgeführt wird, bis das Lenkrad über seine gesamte zu verkleidende Region mit dem Verkleidungsmaterial verklebt ist. Alternativ kann bei einem Negativwerkzeug, das lediglich ein Teilsegment des Lenkradumfangs abbildet, eine Mehrzahl von diesen parallel angewendet werden.

Das Verkleidungsmaterial kann Leder (Echtleder), Kunstleder, ein Textilmaterial oder eine Kombination von diesen sein. Besonderen Vorteil entfaltet das Verfahren bei Verwendung von Leder.

Das Verkleidungsmaterial ist vorzugsweise zum Zeitpunkt seines Aufbringens auf das zu verkleidende Lenkrad auf das erforderliche Endmaß zugeschnitten (konfektioniert). Das Zuschneiden kann dabei vor oder nach dem Beschichten mit dem Klebstoff erfolgen. Vorzugsweise erfolgt das Zuschneiden nach dem Beschichten mit dem Klebstoff, da auf diese Weise der Beschichtungsprozess einfacher zu automatisieren ist, beispielsweise im Rahmen eines Rollenprozesses oder dergleichen.

In einigen Fällen ist es sinnvoll, dass das Verkleidungsmaterial aus mehreren Längssegmenten zusammengesetzt ist. In diesen Fällen werden die einzelnen Segmente bevorzugt vor dem Aufbringen auf das zu verkleidende Lenkrad zu einem Streifen oder einem Ring, dessen Längsverbindung jedoch noch nicht geschlossen ist, verbunden, beispielsweise zusammengenäht.

Das zu verkleidende Lenkrad umfasst in bevorzugter Ausführung ein Lenkradskelett aus einem rigiden Material, beispielsweise Metall, das in einem nachgiebigen Matrixmaterial eingebettet ist. Das Lenkradskelett wird vor dem Aufbringen des Verkleidungsmaterials mit dem Matrixmaterial umspritzt und/oder umschäumt. Insbesondere erfolgt in diesem Schritt die Ausbildung einer formgebenden Matrix, welche das Lenkradskelett zumindest abschnittsweise einbettet und die gewünschte Geometrie des Lenkrads insbesondere auch in Hinblick auf seine Funktionalität und ergonomische Eigenschaften definiert. In bevorzugter Ausführung der Erfindung umfasst das Bereitstellen des zu verkleidenden Lenkrads ein Umschäumen des Lenkradskeletts mit dem Matrixmaterial. Das Umschäumen ist eine Sonderform des Umspritzens. Für das aufschäumbare Matrixmaterial kommen beispielsweise PU-Schäume oder physikalisch aufschäumbare Materialien infrage.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar. Die Erfindung ist jedoch in den Ansprüchen definiert.

Die Erfindung wird nachfolgend in Ausführungsbeispielen anhand der zugehörigen Zeichnungen erläutert. Es zeigen:
- Figur 1: ein zu verkleidendes Lenkrad, A: Gesamtansicht, B: Teilschnitt;
- Figur 2: ein mit Klebstoff kaschiertes Verkleidungsmaterial, A: Draufsicht (Abrollansicht), B: Schnitt;
- Figur 3: Abrollansicht des auf einer Formmanschette angeordneten Verkleidungsmaterials,
- Figur 4: Schnittansicht einer Anordnung aus zu verkleidendem Lenkrad, Verkleidungsmaterial sowie Formmanschette;
- Figur 5: Schnittansicht des mit Verkleidungsmaterial umhüllten zu verkleidenden Lenkrads;
- Figur 6: Schnittansicht der in einem Negativwerkzeug eingebrachten Anordnung aus zu verkleidendem Lenkrad, Verkleidungsmaterial sowie Formmanschette vor ihrer Befüllung/Expansion;
- Figur 7: Schnittansicht der in dem Negativwerkzeug eingebrachten Anordnung aus zu verkleidendem Lenkrad, Verkleidungsmaterial sowie Formmanschette nach ihrer Befüllung/Expansion;
- Figur 8: Schnittansicht des mit Verkleidungsmaterial umklebten Lenkrads nach Entnahme aus dem Negativwerkzeug;
- Figur 9: Endschließen des Verkleidungsmaterials durch Verbinden von Längsrändern durch A: Nähen, B: Reißverschluss, C: Klettverschluss, D: Hakenverschluss; und
- Figur 10: Umkleidungsvorrichtung mit Negativwerkzeug.

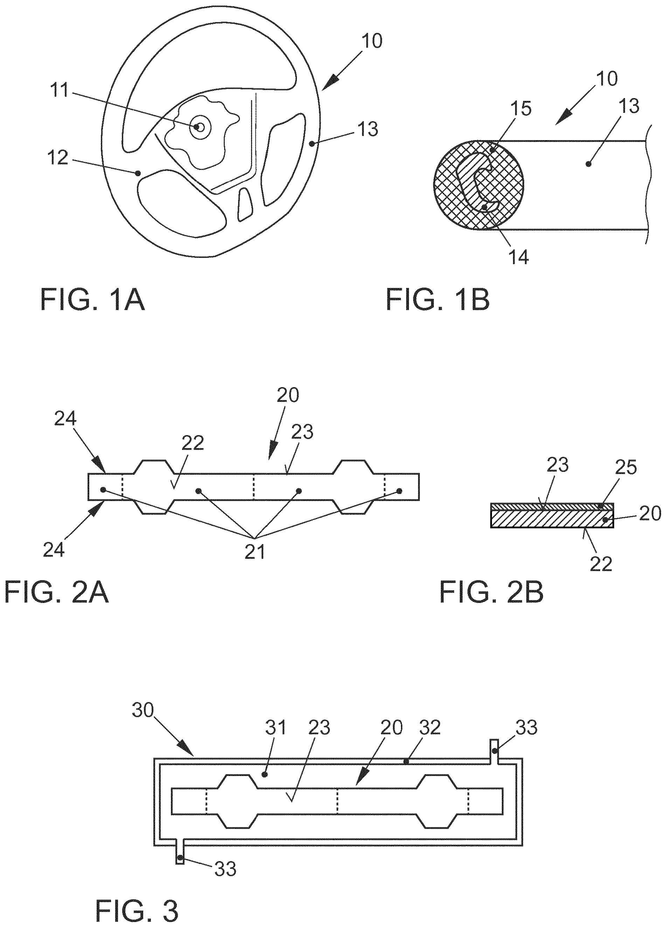

Die Figuren 1 bis 9 zeigen verschieden Prozessstufen eines Verfahrens zum Herstellen eines verkleideten Lenkrads in einer bevorzugten Ausgestaltung der Erfindung.

Zunächst wird in einem ersten Schritt des Verfahrens ein in Figur 1A insgesamt mit 10 bezeichnetes zu verkleidendes Lenkrad bereitgestellt. Das Lenkrad10 umfasst eine Lenkradnabe 11, von der mehrere Lenkradspeichen 12 radial ausgehen und in einen umlaufenden Lenkradkranz 13 übergehen. In Figur 1B ist der Lenkradkranz 13 in einer Schnittansicht gezeigt. Hier ist erkennbar, dass der Lenkradkranz 13 ein Lenkradskelett 14 aufweist, dass in diesem Beispiel als ein im Wesentlichen C-förmiges Profil ausgebildet ist. Üblicherweise ist das Lenkradskelett 14 aus einem metallischen Material, beispielsweise in einem Druckgussverfahren, herstellt. Ferner ist das Lenkradskelett 14 zumindest im Bereich des Lenkradkranzes 13 in einer Matrix 15 eines nachgiebigen Materials eingebettet. Insbesondere ist das Lenkradskelett 14 mit dem Matrixmaterial umspritzt oder umschäumt. Bei dem Matrixmaterial kann es sich beispielsweise um einen Thermoplast oder einen thermoplastischen Elastomer oder einen Schaum von diesen handeln, insbesondere um einen Polyurethanschaum.

Ferner wird gemäß Figur 2 ein Verkleidungsmaterial 20 bereitgestellt. Dabei zeigt Figur 2A das bereits zugeschnittene (konfektionierte) Verkleidungsmaterial 20, das insbesondere Leder ist. In dem dargestellten Beispiel umfasst das Verkleidungsmaterial 20 vier Segmente 21, die über drei Nähte miteinander zu einem Streifen vernäht sind. Das Verkleidungsmaterial weist eine Sichtseite 22 auf, die im fertigen Produkt die außenliegende Oberfläche bildet, sowie eine Nichtsichtseite 23, mit welcher das Verkleidungsmaterial 20 auf das Lenkrad 10 angeordnet werden soll.

Das Verkleidungsmaterial 20 wird auf seiner Nichtsichtseite 23 beschichtet (kaschiert). Dies ist in Figur 2B erkennbar, welche einen Querschnitt des kaschierten Verkleidungsmaterials 20 zeigt, welches auf seiner Nichtsichtseite 23 eine Klebstoffschicht 25 aufweist.

Als Klebstoff 25 wird bevorzugt ein Material verwendet, das erst nach einer geeigneten Aktivierung, insbesondere bei Erwärmung, klebende Eigenschaften entwickelt und in der Lage ist, eine stoffschlüssige Verbindung zwischen Verkleidungsmaterial 20 und Matrixmaterial 15 des Lenkrads 10 herzustellen. Vorzugsweise wird ein thermisch aktivierbarer Schmelzklebstoff verwendet. Geeignete Schmelzklebstoffe umfassen beispielsweise Ethylen-Vinyl-Acetat (EVA), Ethylen-Vinyl-Acetat-Copolymere modifizierte Polyolefine, Polyester etc. Weitere geeignete Klebemassen umfassen Polyurethane, Polymere basierend auf Acrylat oder Acrylsäuremonomeren, Polyvinylalkohol, Silikone, synthetische Elastomere oder natürliche Gummizusammensetzungen. Besonders bevorzugt wird eine thermoplastische Polyurethanzusammensetzung (Mischung aus Polyol und Isocyanat) eingesetzt, die insbesondere als Pulver verwendet werden kann. Die Erfindung schließt jedoch nicht aus, einen Klebstoff zu verwenden, der bereits bei seinem Aufbringen klebende Eigenschaften besitzt.

Die Beschichtungstechnik mit dem Klebstoff 25 kann prinzipiell in beliebiger Weise ausgestaltet sein und hängt von der Art des Klebstoffs 25 ab, insbesondere ob dieser in Form eines Pulvers, einer Schmelze, einer Lösung oder Dispersion, als bereits ausgebildete Schicht in Form einer Folie oder eines Netzes, eines Vlieses, beispielsweise Spinnvlieses, eingesetzt wird. Dementsprechend kommen Nass- und Trockenbeschichtung, Beschichtungen mit oder ohne Lösungsmittel, thermische Beschichtung und andere zum Einsatz. Liegt der Klebstoff 25 als Pulver, Lösung, Dispersion oder Schmelze vor, können Rakel- oder Sprühtechniken verwendet werden. Sofern der Klebstoff 25 bereits als eine Schicht in Form einer Folie oder eines Netzes oder dergleichen ausgebildet ist, kommen Laminier- oder Kaschiertechniken zum Einsatz, wobei der Klebstoff 25 auch auf einer Trägerfolie vorgesehen sein kann, die vor oder nach dem Beschichten entfernt wird.

Vorzugsweise erfolgt das Beschichten der Nichtsichtseite 23 des Verkleidungsmaterials 20 mit dem Klebstoff 25, bevor das Verkleidungsmaterial 20 auf seine in Figur 2A beispielhaft gezeigte Form zugeschnitten wird, das heißt, es wird zunächst beschichtet und sodann das beschichtete Verkleidungsmaterial 20 zugeschnitten (konfektioniert). Das Zuschneiden kann durch Schneiden oder Stanzen erfolgen.

In einer alternativen hier nicht gezeigten Ausführung wird der zu verkleidende Bereich des Lenkrads 10 mit dem Klebstoff 25 beschichtet. Dies kann anstelle der Beschichtung des Verkleidungsmaterials 20 oder zusätzlich zu diesem erfolgen.

Die Beschichtung von Verkleidungsmaterial 20 und/oder Lenkrad 10 mit Klebstoff 25 kann flächendeckend oder punktuell erfolgen.

In einem nachfolgenden Arbeitsschritt wird das Verkleidungsmaterial 20, das mit der Klebstoffschicht 25 kaschiert ist, auf oder in einer Formmanschette angeordnet, was in Figur 3 dargestellt ist. Die hier dargestellte Formmanschette 30 ist im Wesentlichen aus zwei aufeinander angeordneten Folien 31 gebildet, welche in ihrem Randbereich 32 miteinander verbunden, beispielsweise verschweißt sind. Die Folien 31 bestehen vorzugsweise aus einem transparenten, flexiblen Polymermaterial. Der zwischen den beiden Folien 31 ausgebildete Zwischenraum ist über Fluidanschlüsse 33 mit einem Fluid befüllbar und entleerbar. Dabei dient mindestens ein erster Fluidanschluss 33 zur Einleitung des Fluids und ein zweiter Fluidanschluss 33 zur Ableitung desselben. Während Figur 3 die Formmanschette 30 in einer Abrolldarstellung zeigt, ist die Manschette 30 vorzugsweise so gestaltet, dass sie zumindest in ihrem mit Fluid befüllten Zustand im Wesentlichen eine Ringform aufweist, wobei ihre Längsseiten vorzugsweise entlang des inneren Umfangs des Rings einen offenen Spalt ausbilden.

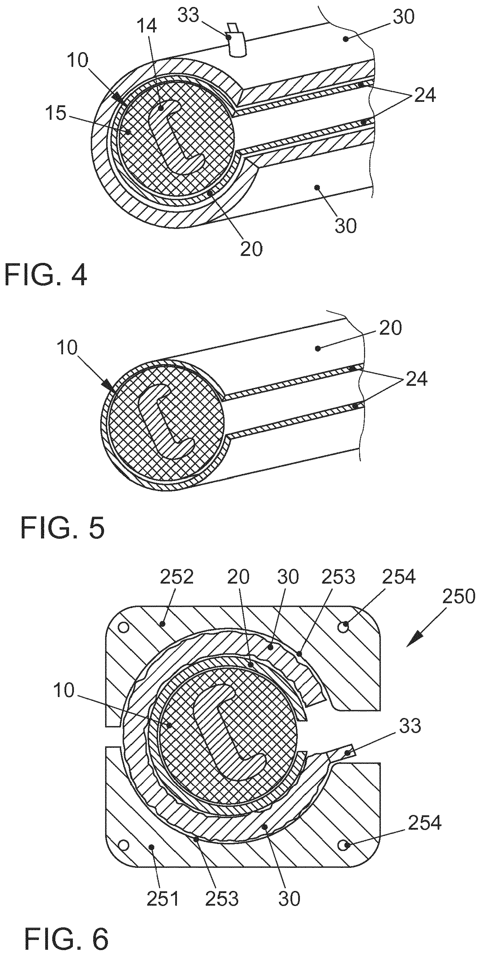

In einem anschließenden Arbeitsschritt wird das in Figur 3 gezeigte Gefüge aus Verkleidungsmaterial 20 und Formmanschette 30 auf das zu verkleidende Lenkrad 10 aufgebracht. Die so erzeugte Anordnung, umfassend das Lenkrad 10, das mit seiner Nichtsichtseite 23 auf dem Lenkrad angeordnete Verkleidungsmaterial 20 sowie die auf der Sichtseite 22 des Verkleidungsmaterials angeordnete Formmanschette 30, ist in Figur 4 dargestellt. In dieser Anordnung befinden sich die Längsränder 24 des Verkleidungsmaterials 20 sowie die Längsränder der Formmanschette 30 auf der gleichen Seite des Lenkrads 10. Insbesondere erstrecken sich in dieser Anordnung die Längsseiten entlang des inneren Umfangs des Lenkradkranzes.

In alternativer Vorgehensweise wird zunächst das kaschierte Verkleidungsmaterial 20 auf das zu verkleidende Lenkrad 10 angeordnet, was in Figur 5 dargestellt ist. Erst dann erfolgt die Anordnung des Gefüges aus Lenkrad 10 und Verkleidungsmaterial 20 auf beziehungsweise in der Formmanschette 30.

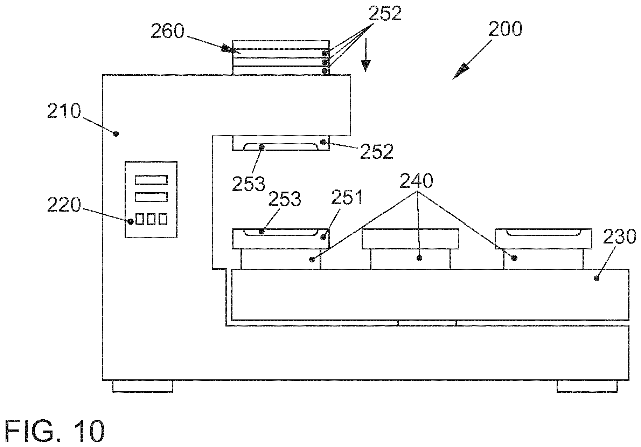

In einem anschließenden Arbeitsgang wird die Anordnung bestehend aus Lenkrad 10, Verkleidungsmaterial 20 und Formmanschette 30 in ein Negativwerkzeug einer Umkleidungsvorrichtung eingelegt. Diese ist in Figur 10 in wesentlichen Zügen dargestellt. Die Vorrichtung 200 weist ein Grundgerüst 210 auf. Ferner ist eine Steuerungseinheit 220 vorhanden, welche verschiedene Prozessparameter, wie Druck oder Temperatur sowie verschiedene Aktoren der Vorrichtung steuert. Auf dem Grundgerüst 210 ist ein drehbar gelagerter Drehteller 230 angeordnet, der wiederrum eine Mehrzahl kreisförmig auf dem Drehteller 230 angeordneter Blöcke 240 trägt. Auf jedem der Blöcke 240 ist jeweils ein unterer Teil 251 eines Negativwerkzeugs angeordnet. Im Bereich eines oberen, den Drehteller 230 teilweise überragenden Arms des Grundgerüsts 210, ist ein Magazin 260 angeordnet, das eine Vielzahl von oberen Teilen 252 des Negativwerkzeugs aufnimmt. Beide Teile 251, 252 weisen jeweils eine Aufnahme 253 auf, in welche ein zu bearbeitendes Lenkrad eingelegt werden kann und die zusammengesetzt eine Kavität ergeben. Dabei wird das Lenkrad manuell oder maschinell auf die unteren Teile 251 des Formwerkzeugs eingelegt. Dann wird an der Bearbeitungsposition, die in Figur 10 auf der linken Seite des Drehtellers 230 dargestellt ist, aus dem Magazin 260 ein oberer Teil 252 aufgelegt und der Drehteller 230 rotiert, sodass der nächste Block 240 in Arbeitsposition gebracht wird. Dies erfolgt solange, bis das Lenkrad vollumfänglich durch entsprechende Negativwerkzeuge, die jeweils aus einem unteren und oberen Teil 251, 252 gebildet sind, eingelegt ist. Die Umkleidungsvorrichtung 200 kann ferner verschiedene Sensoren umfassen, die physikalische Messparameter wie Temperatur, Druck, oder Luftfeuchte erfasst, sodass die Prozessparameter darauf eingestellt werden können.

Figur 6 zeigt eine Schnittdarstellung eines solchen aus einem unteren Teil 251 und einem oberen Teil 252 gebildeten Negativwerkzeug 250 mit einer eingelegten Anordnung aus Lenkrad 10, Verkleidungsmaterial 20 und Formmanschette 30. In dem in Figur 6 dargestellten Zustand ist die Formmanschette 30 noch nicht (oder nur teilweise) mit Fluid befüllt und liegt daher drucklos und locker in einem Zwischenraum, der zwischen dem mit dem Verkleidungsmaterial 20 umwickelten Lenkrad 10 und der Kavität 253 des Negativwerkzeugs 250 ausgebildet ist.

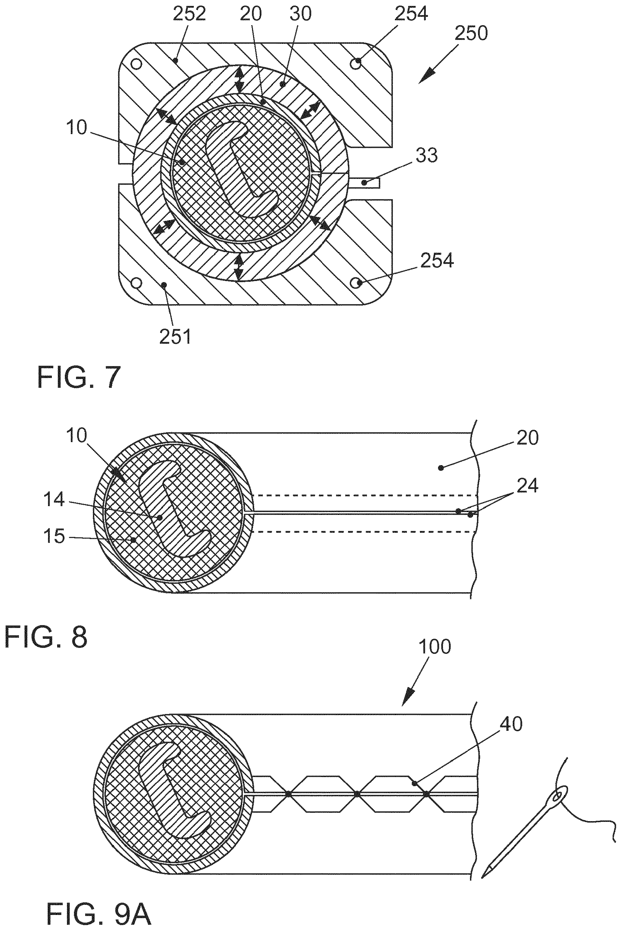

In einem anschließenden in Figur 7 gezeigten Arbeitsgang erfolgt ein Befüllen der Formmanschette 30 mit einem Fluid, beispielsweise Luft, Wasser oder Öl. Hierdurch expandiert die Formmanschette 30, sodass sie den gesamten Zwischenraum zwischen dem mit dem Verkleidungsmaterial 20 umwickelten Lenkrad 10 und dem Negativwerkzeug 250 ausfüllt. Dabei drückt die Formmanschette 30 einerseits an die Werkzeugzeile 251 und 252 und andererseits an das um das Lenkrad 10 gewickelt Verkleidungsmaterial 20. Auf diese Weise wird eine äußerst gleichmäßige Anpresskraft auf den gesamten Umfang des Verkleidungsmaterials 20 ausgeübt.

Vorzugsweise weist hierbei das in die Formmanschette 30 über den Anschluss 33 befüllte Fluid eine Temperatur auf, die zur Aktivierung des Klebstoffs führt, sodass dieser aushärtet, beziehungsweise die sein Aushärten unterstützt. Es kommt somit zu einer faltenfreien Verklebung des Umkleidungsmaterials 20 mit dem Lenkrad 10. Anstelle der Einfüllung eines erwärmten Fluids kann der Wärmeeintrag auch durch ein erwärmtes Kühlmittel (Wärmeträger) erfolgen, das durch ein Leitungssystem 254 geleitet wird, welches in dem Negativwerkzeug 250 vorgesehen ist. Gegebenenfalls können auch beide Maßnahmen zum Eintrag von Wärmeenergie in das System miteinander kombiniert werden.

Optional kann nach einer vorbestimmten Aushärtezeit eine aktive Kühlung des Systems herbeigeführt werden. Ähnlich wie das Erwärmen, kann auch das Kühlen darüber erfolgen, dass entweder ein kaltes Fluid in die Formmanschette 30 eingeleitet wird oder indem ein kaltes Kühlmittel über das Leitungssystem 254 des Negativwerkzeugs 250 geleitet wird. Anstelle einer aktiven Kühlung kann die Kühlung auch passiv durch Wärmeaustausch mit der Umgebung erfolgen.

Anschließend erfolgt eine Entnahme des mit dem Verkleidungsmaterial 20 umklebten Lenkrads 10 aus dem Negativwerkzeug 250 und der Formmanschette 30. Hierfür wird der obere Teil 252 des Negativwerkzeugs abgenommen und die Anordnung aus Lenkrad 10, Verkleidungsmaterial 20 sowie Formmanschette 30 aus dem Werkzeug entnommen. Vor oder nach diesem Entnahmeschritt wird das Fluid aus der Formmanschette 30 abgelassen. Figur 8 zeigt eine Schnittdarstellung eines verkleideten Lenkrads, umfassend das Lenkradskelett 14, die Matrix 15 sowie das mit der Matrix 15 verklebte Verkleidungsmaterial 20 nach Entnahme aus dem Negativwerkzeug 250 sowie der Formmanschette 30.

Nach der Entnahme erfolgt ein Endschließen des Verkleidungsmaterials 20 durch Verbinden der beiden Längsränder 24 miteinander. Das Endschließen kann beispielsweise durch Nähen entlang einer Nahtstelle, die in Figur 8 durch die beiden unterbrochenen Linien dargestellt ist, erfolgen.

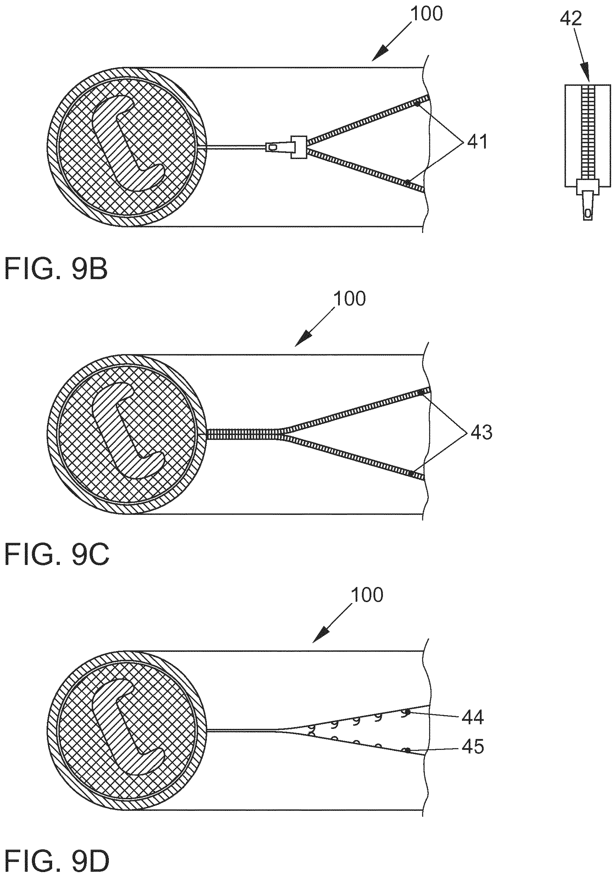

Ein Beispiel für das Endschließen der beiden Längsränder 24 durch manuelles Nähen ist in Figur 9A dargestellt. Weitere Endschließtechniken sind in den Figuren 9B bis 9D gezeigt. So kann das Endschließen durch manuelles oder automatisches Schließen zweier an den Längsrändern 24 des Verkleidungsmaterials 20 befestigten Reißverschlusshälften 41 unter Erhalt eines geschlossenen Reißverschlusses 42 erfolgen (Figur 9B). Weiterhin kann das Endschließen durch manuelles oder automatisiertes Verbinden zweier Klettverschlusshälften 43 erfolgen (Figur 9C). Eine weitere Möglichkeit des Endschließens ist in Figur 9D dargestellt, wonach das Endschließen durch Verhaken von Haken 44 und Ösen 45, welche entlang der Längsränder 24 des Verkleidungsmaterials 20 angeordnet sind, erfolgt.

### Bezugszeichenliste

- 10: zu verkleidendes Lenkrad
- 100: verkleidetes Lenkrad

- 11: Lenkradnabe
- 12: Lenkradspeiche
- 13: Lenkradkranz
- 14: Lenkradskelett
- 15: Matrix

- 20: Verkleidungsmaterial
- 21: Segment
- 22: Sichtseite
- 23: Nichtsichtseite
- 24: Längsrand
- 25: Klebstoff

- 30: Formmanschette
- 31: Folie
- 32: Randbereich
- 33: Fluidanschluss

- 40: Naht
- 41: Reißverschlusshälfte
- 42: Reißverschluss
- 43: Klettverschlusshälften
- 44: Haken
- 45: Ösen

- 200: Umkleidungsvorrichtung
- 210: Grundgerüst
- 220: Steuerungseinheit
- 230: Drehteller
- 240: Block
- 250: Negativwerkzeug
- 251: unterer Teil
- 252: oberer Teil
- 253: Aufnahme/Kavität
- 254: Leitungssystem
- 260: Magazin

## Patentansprüche

1. Verfahren zum Herstellen eines verkleideten Lenkrads (100) für ein Fahrzeug mit den Schritten:
- Bereitstellen eines zu verkleidenden Lenkrads (10) sowie eines Verkleidungsmaterials (20);
- Beschichten des zu verkleidenden Lenkrads (10) und/oder einer Nichtsichtseite (23) des Verkleidungsmaterials (20) mit einem Klebstoff (25);
- Herstellen einer Anordnung umfassend das zu verkleidende Lenkrad (10), das mit seiner Nichtsichtseite (23) auf dem Lenkrad (10) angeordnete Verkleidungsmaterial (20) sowie eine mit einem Fluid befüllbare Formmanschette (30), die auf einer Sichtseite (22) des Verkleidungsmaterials (20) angeordnet ist;
- Einlegen der Anordnung in eine Kavität (253) eines Negativwerkzeugs (250);
- Befüllen der Formmanschette (30) mit dem Fluid, sodass die Formmanschette (30) gegen das Negativwerkzeug (250) und gegen das von dem Verkleidungsmaterial (20) umgebene zu verkleidende Lenkrad (10) anpresst;
- Aktivieren und/oder Aushärten des Klebstoffs (25);
- Entnahme des mit dem Verkleidungsmaterial (20) umklebten Lenkrads (10) aus dem Negativwerkzeug (250) und der Formmanschette (30); und
- Endschließen des Verkleidungsmaterials (20) durch Verbinden von Längsrändern (24) desselben miteinander.

2. Verfahren nach dem vorhergehenden Anspruch, wobei die Formmanschette (30) aus einer flexiblen und/oder elastischen Polymerfolie gebildet ist.

3. Verfahren nach einem der vorhergehenden Ansprüche, wobei die Formmanschette (30) aus einem transparenten Polymermaterial gebildet ist.

4. Verfahren nach einem der vorhergehenden Ansprüche, wobei die Formmanschette (30) im befüllten Zustand eine längsseitig offene Ringform aufweist.

5. Verfahren nach einem der vorhergehenden Ansprüche, wobei zum Aktivieren und/oder Aushärten des Klebstoffs (25) die Formmanschette (30) mit einem erwärmten Fluid befüllt wird.

6. Verfahren nach einem der vorhergehenden Ansprüche, wobei zum Aktivieren und/oder Aushärten des Klebstoffs (25) eine Heizeinrichtung des Negativwerkzeugs (250) aktiviert wird.

7. Verfahren nach einem der vorhergehenden Ansprüche, wobei nach dem Aushärten des Klebstoffs (25) zum Kühlen die Formmanschette (30) mit einem kalten Fluid befüllt wird.

8. Verfahren nach einem der vorhergehenden Ansprüche, wobei das Endschließen des Verkleidungsmaterials (20) durch Nähen, Kleben, Schließen von Reißverschlusshälften (41), Einhaken von Hakenverschlüssen (44, 45), Verbinden von Klettverschlusshälften (43) oder eine Kombination von diesen erfolgt.

9. Verfahren nach einem der vorhergehenden Ansprüche, wobei das Negativwerkzeug (250) zwei Werkzeughälften (251, 252) umfasst, die zusammen die Kavität (253) ausbilden.

## Claims

1. Method for producing a covered steering wheel (100) for a vehicle, having the steps of:
- providing a steering wheel (10) to be covered and a covering material (20);
- coating the steering wheel (10) to be covered and/or a non-visible side (23) of the covering material (20) with an adhesive (25);
- producing an arrangement comprising the steering wheel (10) to be covered, the covering material (20) arranged with its non-visible side (23) on the steering wheel (10), and a mould sleeve (30) which can be filled with a fluid and which is arranged on a visible side (22) of the covering material (20);
- inserting the arrangement into a cavity (253) of a negative tool (250);
- filling the mould sleeve (30) with the fluid, such that the mould sleeve (30) presses against the negative tool (250) and against the steering wheel (10) to be covered which is surrounded by the covering material (20);
- activating and/or curing the adhesive (25);
- removing the steering wheel (10) around which the covering material (20) has been adhesively applied from the negative tool (250) and the mould sleeve (30); and
- finally closing the covering material (20) by connecting longitudinal edges (24) of same to one another.

2. Method according to the preceding claim, wherein the mould sleeve (30) is formed from a flexible and/or elastic polymer film.

3. Method according to either of the preceding claims, wherein the mould sleeve (30) is formed from a transparent polymer material.

4. Method according to one of the preceding claims, wherein the mould sleeve (30) has a longitudinally open ring shape in the filled state.

5. Method according to one of the preceding claims, wherein the mould sleeve (30) is filled with a heated fluid for the purpose of activating and/or curing the adhesive (25).

6. Method according to one of the preceding claims, wherein a heating device of the negative tool (250) is activated for the purpose of activating and/or curing the adhesive (25).

7. Method according to one of the preceding claims, wherein, after the adhesive (25) has been cured, the mould sleeve (30) is filled with a cold fluid for cooling purposes.

8. Method according to one of the preceding claims, wherein the final closing of the covering material (20) is effected by sewing, adhesive bonding, closing of zip fastener halves (41), hooking-in of hook closures (44, 45), connecting of hook-and-loop fastener halves (43) or a combination of these.

9. Method according to one of the preceding claims, wherein the negative tool (250) comprises two tool halves (251, 252) which together form the cavity (253) .

## Revendications

1. Procédé de fabrication d'un volant recouvert (100) destiné à un véhicule, ledit procédé comprenant les étapes suivantes :
- fournir un volant (10) à recouvrir et un matériau de recouvrement (20) ;
- enduire le volant (10) à recouvrir et/ou un côté non visible (23) du matériau de recouvrement (20) avec un adhésif (25) ;
- réaliser un ensemble comprenant le volant (10) à recouvrir, le matériau de recouvrement (20) disposé avec son côté non visible (23) sur le volant (10) et un manchon de moulage (30) qui peut être rempli d'un fluide et qui est disposé sur un côté visible (22) du matériau de recouvrement (20) ;
- insérer l'ensemble dans une cavité (253) d'un outil négatif (250) ;
- remplir le manchon de moulage (30) avec le fluide de sorte que le manchon de moulage (30) presse contre l'outil négatif (250) et contre le volant (10) à recouvrir, qui est entouré par le matériau de recouvrement (20) ;
- activer et/ou durcir l'adhésif (25) ;
- retirer le volant (10), autour duquel est encollé le matériau de revêtement (20), de l'outil négatif (250) et du manchon de moulage (30) ; et
- fermer définitivement le matériau de recouvrement (20) par liaison de bords longitudinaux (24) de celuici les uns aux autres.

2. Procédé selon la revendication précédente, le manchon de moulage (30) étant formé à partir d'un film de polymère flexible et/ou élastique.

3. Procédé selon l'une des revendications précédentes, le manchon de moulage (30) étant formé d'un matériau polymère transparent.

4. Procédé selon l'une des revendications précédentes, le manchon de moulage (30) ayant une forme annulaire ouverte longitudinalement à l'état rempli.

5. Procédé selon l'une des revendications précédentes, le manchon de moulage (30) étant rempli d'un fluide chauffé afin d'activer et/ou de durcir l'adhésif (25).

6. Procédé selon l'une des revendications précédentes, un dispositif de chauffage de l'outil négatif (250) étant activé pour activer et/ou durcir l'adhésif (25).

7. Procédé selon l'une des revendications précédentes, le manchon de moulage (30) étant rempli d'un fluide froid après le durcissement de l'adhésif (25) afin d'effectuer le refroidissement.

8. Procédé selon l'une des revendications précédentes, la fermeture définitive du matériau de recouvrement (20) étant réalisée par couture, collage, fermeture des moitiés de fermeture à glissière (41), accrochage d'attaches à crochets (44, 45), liaison de moitiés de fixation auto-agrippantes (43) ou une combinaison de ceux-ci.

9. Procédé selon l'une des revendications précédentes, l'outil négatif (250) comprenant deux moitiés d'outil (251, 252) qui forment conjointement la cavité (253).
